# EUROPEAN PATENT APPLICATION

(11) **EP 3 660 724 A1**
(43) Date of publication of application: **03.06.2020**
(21) Application number: 19196551.6
(22) Date of filing: 10.09.2019
(51) Int. Cl.: G06F 30/15, G06F 30/18, G06F 113/16, H04Q 1/02

(54) **APPARATUS AND METHOD OF PROCESSOR-AIDED WIRING OF COMPONENTS OF AN ELECTRICAL SYSTEM**

(30) Priority: 27.11.2018 US 201816201469
(71) Applicant: The Boeing Company, Chicago, IL 60606-1596 (US)
(72) Inventor: Roecker, John Anthony, Chicago, IL 60606-1596 (US); Allmaras, Gerald L., Chicago, IL 60606-1596 (US)
(74) Representative: Witte, Weller & Partner Patentanwälte mbB

(57) **Abstract**

A method includes receiving first data indicating a plurality of components associated with a representation of an electrical system. The first data further indicates an option to generate one or more logical connections between at least some of the plurality of components. The method further includes receiving second data indicating a command to connect a first component of the plurality of components to a second component of the plurality of components. The method further includes selecting a type of wiring connection between the first component and the second component based on the command and further based on wiring information associated with the representation of the electrical system. The method further includes outputting third data indicating the type of wiring connection between the first component and the second component.

## Description

### BACKGROUND

The present disclosure is generally related to processor-aided wiring of components of an electrical system. Vehicles include electrical systems that supply power to vehicle components. Electrical systems also enable communication between vehicle components, such as by routing an output signal from one component to an input of another component. Certain vehicles include complex subsystems that exchange a large amount of data or signals. For example, certain aircraft include thousands of wired connections between components.

Some electrical systems include patch panels to simplify connection of vehicle components. For example, in some cases, physical access to a particular vehicle component can be limited. In this case, electrically connecting, disconnecting, or reconnecting components through jacks of a patch panel can be more convenient than physically accessing the components.

Patch panels also can reduce wear on vehicle components, reducing cost of replacing vehicle components. For example, connecting and disconnecting cables to a jack of a component can subject the jack to wear. In some cases, a patch bay is used to electrically connect, disconnect, and reconnect components in order to reduce wear on vehicle components, which can be expensive and difficult to physically access.

In some cases, electrically connecting, disconnecting, and reconnecting components using patch panels and other devices in an electrical system is difficult. For example, to locate a connection from one component to another component, wires or cables are sometimes visually "followed" (e.g., by inspecting an output of one component to identify a cable and by following the cable through a patch panel to an input of another component). In the case of a large number of vehicle components and wires, such a technique is time consuming, increasing expenses associated with fabricating, inspecting, and maintaining a vehicle and potentially increasing an amount of time the vehicle is out-of-service.

### SUMMARY

In a particular example, a method of processor-aided wiring of components of an electrical system includes receiving, by a processor and during execution of a design tool by the processor, first data indicating a plurality of components associated with a representation of an electrical system. The first data further indicates an option to generate one or more logical connections between at least some of the plurality of components. The method further includes receiving, at the processor, second data indicating a command to connect a first component of the plurality of components to a second component of the plurality of components. The method further includes selecting, by the processor, a type of wiring connection between the first component and the second component based on the command and further based on wiring information associated with the representation of the electrical system. The method further includes outputting, by the processor, third data indicating the type of wiring connection between the first component and the second component.

In another example, an apparatus to aid in wiring of components of an electrical system includes a memory configured to store instructions of a design tool. The apparatus further includes a processor coupled to the memory. The processor is configured to receive first data indicating a plurality of components associated with a representation of an electrical system. The first data further indicates an option to generate one or more logical connections between at least some of the plurality of components. The processor is further configured to receive second data indicating a command to connect a first component of the plurality of components to a second component of the plurality of components. The processor is further configured to execute the instructions to select a type of wiring connection between the first component and the second component based on the command and further based on wiring information associated with the representation of the electrical system. The processor is further configured to execute the instructions to output third data indicating the type of wiring connection between the first component and the second component.

In another example, a computer-readable medium stores instructions executable by a processor to initiate, perform, or control operations for processor-aided wiring of components of an electrical system. The operations include receiving, by a processor and during execution of a design tool by the processor, first data indicating a plurality of components associated with a representation of an electrical system. The first data further indicates an option to generate one or more logical connections between at least some of the plurality of components. The operations further include receiving, at the processor, second data indicating a command to connect a first component of the plurality of components to a second component of the plurality of components. The operations further include selecting, by the processor, a type of wiring connection between the first component and the second component based on the command and further based on wiring information associated with the representation of the electrical system. The operations further include outputting, by the processor, third data indicating the type of wiring connection between the first component and the second component.

### BRIEF DESCRIPTION OF THE DRAWINGS

FIG. 1 is a diagram illustrating certain aspects of an example of a system configured to perform processor-aided wiring of components of an electrical system.
FIG. 2 is a diagram illustrating certain additional aspects of an example of the system of FIG. 1.
FIG. 3 is a diagram of an example of a method of processor-aided wiring of components of an electrical system, such as the electrical system of FIG. 1.
FIG. 4 is a flow chart of an example of a life cycle of a vehicle including an electrical system, such as the electrical system of FIG. 1.
FIG. 5 is a block diagram illustrating aspects of an example of a computing system that is configured to execute instructions to initiate, perform, or control operations of the method of FIG. 3.
FIG. 6 is a block diagram illustrating aspects of an illustrative implementation of a vehicle that includes an example of the electrical system of FIG. 1.

### DETAILED DESCRIPTION

In a particular implementation, processor-aided wiring of components of an electrical system is performed using a graphical user interface (GUI). In some examples, the processor-aided wiring of the components of the electrical system is performed during design of a vehicle that includes the electrical system, such as in connection with execution of a design tool by a processor. In a particular example, the GUI presents a representation (e.g., a picture) of the electrical system and an option to form a logical connection between components of the electrical system.

In response to selection of a particular logical connection between components represented via the GUI, the processor is configured to select a particular type of wiring connection of the vehicle. To illustrate, in a non-limiting illustrative example, the processor is configured to identify one or more of a connector, a pin of a connector, a patch panel, or a port of a patch panel of the vehicle based on selection of the particular logical connection. In a particular example, the processor is configured to determine a patch panel assembly design manufacturing report based on the type of wiring connection. In some implementations, the patch panel assembly design manufacturing report indicates physical connections of the vehicle, such as by identify a particular cable and a particular port of a patch panel to which the cable is to be connected.

By determining wiring connections during design of a vehicle (e.g., during execution of the design tool), wiring connections and formation of the wiring connections are simplified. For example, during design, a user can select a logical interface between two components without necessarily specifying physical connections (e.g., without specifying that a cable is to be routed through a patch panel). As a result, the user can avoid specifying physical properties of the connection, which can instead be determined by the processor using wiring information associated with the electrical system (e.g., where the wiring information indicates a physical layout of the electrical system, port availability of the electrical system, connectors of the electrical system, electrical components of the electrical system, wiring harnesses of the electrical system, other information, or a combination thereof). Further, the patch panel assembly design manufacturing report can specify a characteristic of a physical connection (e.g., which cables are to be connected to which port of a patch panel), reducing or avoiding instances of manually following a cable from an output, through a patch panel, and to a destination, etc.

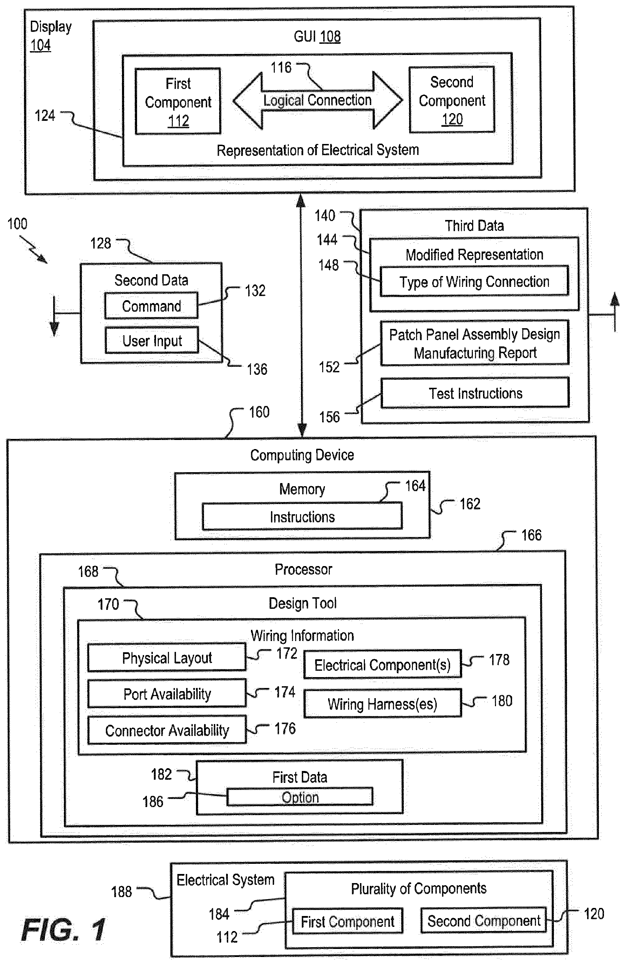

Referring to FIG. 1, a particular illustrative example of a system is depicted and generally designated 100. The system 100 includes a display 104 and a computing device 160. The computing device 160 is coupled to the display 104 via one or more connections, such as a wired connection, a wireless connection, or a combination thereof.

The computing device 160 includes a processor 166 and a memory 162 that is coupled to the processor 166. The memory 162 is configured to store instructions, such as instructions 164 of a design tool 168. For example, in some implementations, the design tool 168 includes or corresponds to a computer-aided design (CAD) program executable by the processor 166 to generate or modify a design of an electrical system 188.

In some examples, the display 104 is configured to present a graphical user interface (GUI) 108. In some implementations, the display 104 is configured to present, via the GUI 108, a representation 124 of the electrical system 188. To illustrate, in some examples, the representation 124 includes a diagram, a schematic, a parts list, a flow diagram, or other information representing the electrical system 188.

During operation, the processor 166 executes the instructions 164 of the design tool 168. The processor 166 is configured to receive first data 182 during execution of the instructions 164. In a particular example, the processor 166 retrieves the first data 182 from the memory 162 or from an external device (e.g., from a server based on a request sent via the Internet) based on user input during execution of the instructions 164.

In some implementations, one or more of the design tool 168 or the first data 182 includes wiring information 170 associated with the electrical system 188. As non-limiting illustrative examples, in FIG. 1, the wiring information 170 indicates a physical layout 172 of the electrical system 188, port availability 174 of one or more patch panels of the electrical system 188, connector availability 176 of the electrical system 188, one or more electrical components 178 of the electrical system 188, one or more wiring harnesses 180 of the electrical system 188, or a combination thereof.

In some implementations, the first data 182 includes information associated with the electrical system 188. For example, in some implementations, the first data 182 includes a data file that represents the electrical system 188 and that is usable by the processor 166 during execution of the design tool 168. In some examples, the first data 182 includes graphics data that the computing device 160 sends to the display 104 for presentation via the GUI 108.

The first data 182 indicates a plurality of components 184 associated with the representation 124 of the electrical system 188. For example, in FIG. 1, the plurality of components 184 includes a first component 112 and a second component 120. In other examples, the plurality of components 184 can include a different number of components.

The first data 182 further indicates an option 186 to generate one or more logical connections between at least some of the plurality of components 184. To illustrate, in some implementations, the option 186 includes graphics data corresponding to a logical connection 116 presented via the GUI 108. In some examples, a user can "drag and drop" the logical connection 116 to connect the first component 112 to the second component 120.

The processor 166 is also configured to receive second data 128 (e.g., from an input device coupled to the computing device 160). In the example of FIG. 1, the second data 128 is connected to an arrow to indicate that the second data 128 is sent to the computing device 160 by a user input device or by another device. In one example, the second data 128 is generated based on user input 136, such as based on a user connecting the first component to 112 to the second component 120 via the logical connection 116. The second data 128 indicates a command 132 to connect the first component 112 to the second component 120. In a particular example, the command 132 is received based on the user input 136 via the GUI 108.

The processor 166 is configured to execute the instructions 164 to select a type of wiring connection 148 between the first component 112 and the second component 120 based on the command 132 and further based on the wiring information 170. As non-limiting illustrative examples, in some implementations, the processor 166 selects the type of wiring connection 148 by identifying, based on the wiring information 170, one or more of an available port of a patch panel of the electrical system 188 or an available pin of a connector of the electrical system 188. In this case, the type of wiring connection 148 indicates a particular port of a patch panel of the electrical system 188 or a particular pin of a connector of the electrical system 188, as illustrative examples.

The processor 166 is configured to execute the instructions to output third data 140 indicating the type of wiring connection 148 between the first component 112 and the second component 120. In some implementations, the processor 166 is configured to initiate display of the type of wiring connection 148 via the GUI 108. In one example, the third data 140 includes a modified representation 144 of the electrical system 188 that specifies the type of wiring connection 148. In a particular example, the modified representation 144 of the electrical system 188 illustrates a modified graphical depiction (e.g., a modified diagram, a modified schematic, a modified parts list, a modified flow diagram, or other information) based on the type of wiring connection 148. In some implementations, displaying the type of wiring connection 148 via the GUI 108 enables a user to verify the type of wiring connection 148. In the example of FIG. 1, the third data 140 is connected to an arrow to indicate that the third data 140 is sent by the computing device 160 to the display 104, to another device, or a combination thereof.

Alternatively or in addition to the modified representation 144, in some implementations, the third data 140 includes at least a portion of a patch panel assembly design manufacturing report 152 that is based on the type of wiring connection 148. In a particular example, the patch panel assembly design manufacturing report 152 indicates wiring connections associated with one or more patch panels of the electrical system 188, where at least one of the wiring connections is based on the type of wiring connection 148. In some implementations, the third data 140 includes a portion (but not all) of the patch panel assembly design manufacturing report 152. For example, in some examples, the third data 140 includes a delta file that indicates a modification to the patch panel assembly design manufacturing report 152 due to the type of wiring connection 148. As a particular example, the delta file may indicate a new (or modified) connection to be made in a patch panel of the electrical system 188 to connect certain components of the electrical system 188, such as a connection to couple the first component 112 to the second component 120.

In some implementations, the patch panel assembly design manufacturing report 152 specifies an identifier of a cable. To illustrate, in one example, the patch panel assembly design manufacturing report 152 specifies one or more of a color of or a numerical identifier attached to a cable that is to connect the first component 112 to the second component 120. As a result, identification of the cable during and after component wiring is simplified. For example, in some cases, the identifier is used to identify the cable during physical wiring or maintenance of a vehicle that includes the electrical system 188 (e.g., instead of following the output of the first component 112 through a patch panel and to the second component 120).

Alternatively or in addition, in some implementations, the patch panel assembly design manufacturing report 152 specifies an identifier of a patch panel, an identifier of a particular portion of a patch panel, or a combination thereof. To illustrate, in one example, the patch panel assembly design manufacturing report 152 specifies a patch panel or a particular port of a patch panel that is to be used to connect the first component 112 to the second component 120. As a result, identification of the patch panel during and after component wiring is simplified. For example, in some cases, the identifier is used to identify the patch panel during physical wiring or maintenance of a vehicle that includes the electrical system 188 (e.g., instead of following the output of the first component 112 through the patch panel).

In some implementations, the system 100 includes an output device configured to generate the patch panel assembly design manufacturing report 152 based on the type of wiring connection 148 (or a portion of the patch panel assembly design manufacturing report 152). In a particular example, the output device includes a printer coupled to the computing device 160 (e.g., via a wired connection, via a wireless connection, or both), and the printer is configured to print the patch panel assembly design manufacturing report 152 (or a portion of the patch panel assembly design manufacturing report 152). Alternatively or in addition, in other examples, the output device includes another device, such as a communications interface that is configured to generate a message (e.g., an email) indicating the patch panel assembly design manufacturing report 152.

Alternatively or in addition, in other examples, the output device includes an automated wiring system that is configured to form a physical wiring connection based on the type of wiring connection 148. In a particular example, a patch panel of the electrical system 188 includes a programmable hardware device, such as a field-programmable gate array (FPGA), a set of transistor fuses, or a set of transistor anti-fuses, as illustrative examples. Alternatively or in addition, in some implementations, a patch panel of the electrical system 188 includes a network device, such as a switch, a hub, or a router. In a particular example, the network device is configured to selectively route signals within the patch panel based on the patch panel assembly design manufacturing report 152. Thus, in some examples, a physical wiring connection is formed automatically based on the patch panel assembly design manufacturing report 152 (e.g., without human intervention).

In some implementations, the third data 140 includes test instructions 156 that specify one or more aspects of a testing process to verify a physical wiring connection made based on the type of wiring connection 148. For example, in some implementations, the test instructions 156 specify a test process to verify, upon wiring a vehicle (e.g., an aircraft) based on the patch panel assembly design manufacturing report 152, that the components 112, 120 are in electrical communication, such as using a debugging process, as an illustrative example.

In some implementations, the processor 166 is configured to update the wiring information 170 in response to selecting the type of wiring connection 148. In an illustrative example, the type of wiring connection 148 indicates at least one pin of a connector and at least one port of a patch panel, and the processor 166 updates the port availability 174 and the connector availability 176 (e.g., to indicate that the pin and the port are no longer available).

In some implementations, the GUI 1 08 enables selection of one or more parameters for enhancement (or optimization). To illustrate, in one example, the GUI 108 enables selection of a first parameter (e.g., weight of a vehicle that includes the electrical system 188), a second parameter (e.g., ease of assembly), a third parameter (e.g., performance), one or more other parameters, or a combination thereof.

In a particular example, selection of the first parameter causes the processor 166 to select the type of wiring connection 148 that reduces (or minimizes) weight of a vehicle (e.g., an aircraft) that includes the electrical system 188, such as by selecting a lower-gauge wire or by selecting a shortest path between components (e.g., based on distances between components indicated by the physical layout 172), as illustrative examples. In a particular example, selection of the second parameter causes the processor 166 to select the type of wiring connection 148 that increases ease of assembly, such as by increasing space between patch panel connections to facilitate ease of access, by selecting a patch panel that is an easy-to-reach physical location, or by selecting more ergonomically convenient connectors (or connector sizes), as illustrative examples. In a particular example, selection of the third parameter causes the processor 166 to select the type of wiring connection 148 that increases performance of the electrical system 188, such as by selecting a higher-gauge wire to decrease impedance or capacitance associated with wiring of the electrical system 188, as an illustrative example. In a particular implementation, the GUI 108 enables a user to prioritize the parameters (e.g., where the first parameter is more important than the second parameter, and the second parameter is more important than the third parameter, as an illustrative example).

One or more aspects of FIG. 1 reduce complexity associated with wiring of the electrical system 188. For example, during design, a user can select the logical connection 116 without necessarily specifying physical connections (e.g., without specifying that a cable is to be routed through a patch panel). As a result, the user can avoid specifying physical properties of the connection, which can instead be determined by the processor 166 using wiring information 170. Further, in some implementations, the patch panel assembly design manufacturing report 152 specifies a characteristic of a physical connection (e.g., the type of wiring connection 148), reducing or avoiding instances of manually following a cable from an output, through a patch panel, and to a destination, etc.

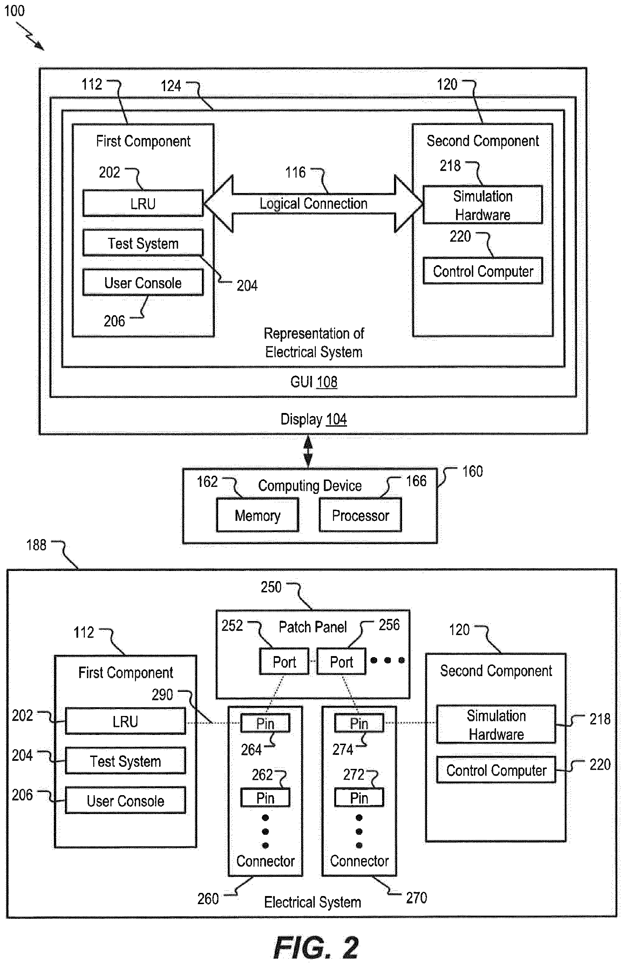

FIG. 2 depicts certain additional illustrative aspects of particular examples of the system 100. It is noted that the examples of FIG. 2 are illustrative and that in other implementations the system 100 can include one or more other components (alternatively or in addition to the components illustrated in FIG. 2).

In the example of FIG. 2, the first component 112 includes (or corresponds to) one or more of a line-replaceable unit (LRU) 202 of the electrical system 188, a test system 204 of the electrical system 188, or a user console 206 of the electrical system 188. The example of FIG. 2 also depicts that the second component 120 includes (or corresponds to) one or more of simulation hardware 218 of the electrical system 188 or a control computer 220 of the electrical system 188. FIG. 2 also shows that the representation 124 of the electrical system 188 represents the LRU 202, the test system 204, the user console 206, the simulation hardware 218, and the control computer 220.

The example of FIG. 2 also illustrates that the electrical system 188 includes one or more patch panels, such as a patch panel 250. The patch panel 250 includes a plurality of ports, such as a port 252 and a port 256. In a particular example, the port 252 corresponds to an input port of the patch panel 250, and the port 256 corresponds to an output port of the patch panel 250.

Alternatively or in addition to the patch panel 250, in some implementations, the electrical system 188 includes one or more connectors, such as a connector 260 and a connector 270. In some implementations, one or both of the connectors 260, 270 correspond to a cable having multiple contacts. For example, in FIG. 2, the connector 260 includes multiple pins, such as a pin 262 and a pin 264. As another example, in FIG. 2, the connector 270 includes multiple pins, such as a pin 272 and a pin 274.

During operation, the processor 166 is configured to receive the command 132 of FIG. 1 specifying the logical connection 116. To illustrate, in the particular example of FIG. 2, the logical connection 116 specifies the LRU 202 and the simulation hardware 218. In one example, a user "drags and drops" an icon indicated by the GUI 108 corresponding to the logical connection 116 to generate the user input 136. For example, in some implementations, the GUI 108 enables the user to connect a first end of the icon to a particular component (e.g., the first component 112) and to connect a second end of the icon to another component (e.g., the second component 120). In a particular illustrative example, the icon indicates that the first end is an output terminal and further indicates that the second end is an input terminal. In this particular example, the logical connection 116 indicates that the LRU 202 is to provide one or more signals to the simulation hardware 218.

In response to selection of the logical connection 116, the processor 166 is configured to determine the type of wiring connection 148. To illustrate, in some examples, the processor 166 is configured to identify the patch panel 250 based on the logical connection 116. For example, in some implementations, the processor 166 selects the patch panel 250 from among a plurality of patch panels of the electrical system 188, such as in response to determining (e.g., based on the wiring information 170 of FIG. 1) that the patch panel 250 is nearer to the components 112, 120 as compared to other patch panels of the electrical system 188. In this example, the processor 166 can select the patch panel 250 to reduce or avoid increased impedance associated with long cable connections. In some implementations, the wiring information 170 of FIG. 1 indicates physical locations of each patch panel of the electrical system 188.

In some implementations, the processor 166 is configured to determine the type of wiring connection 148 based on availability of the patch panel 250. For example, in some implementations, the processor 166 is configured to determine that one or more other patch panels of the electrical system 188 lack port availability (e.g., that one or more other patch panels are "full" of wiring connections based on the port availability 174 of FIG. 1). In this example, the processor 166 is configured to identify the patch panel 250 based on port availability of the patch panel 250. In some implementations, the wiring information 170 of FIG. 1 indicates port availability of each patch panel of the electrical system 188.

Alternatively or in addition, in some implementations, the processor 166 is configured to determine the type of wiring connection 148 to reduce weight of a vehicle (e.g., an aircraft) that includes the electrical system 188. For example, in some implementations, the processor 166 is configured to reduce weight of the vehicle by selecting a lower-gauge wire or by selecting a shortest path between components, as illustrative examples. In some cases, the processor 166 is configured to reduce a number of patch panels of the vehicle (e.g., by "consolidating" connections into a particular patch panel), reducing weight of the vehicle.

Alternatively or in addition, in some examples, the processor 166 is configured to identify one or more connectors of the electrical system 188 to determine the type of wiring connection 148. To illustrate, in a particular example, the processor 166 is configured to identify availability of one or more of the connector 260, the pin 264, the connector 270 or the pin 274. Alternatively or in addition, in a particular example, the processor 166 is configured to identify a physical location of one or more of the connector 260 or the connector 270.

In a particular illustrative example, the processor 166 is configured to determine the type of wiring connection 148 based on tracing a signal path 290 associated with the logical connection 116. To illustrate, in a particular example, the processor 166 is configured to trace the signal path 290 by identifying that an output signal of the first component 112 is to be provided to an input terminal of the simulation hardware 218. In a particular example, the processor 166 is configured to select an input port of the patch panel 250 (e.g., by selecting the port 252) to receive the output signal of the first component 112 and to select an output port of the patch panel 250 (e.g., the port 256). In this example, the processor 166 is configured to identify one or more ports (e.g., the ports 252, 256) of the patch panel 250 based on the signal path 290.

Although certain examples of components have been described with reference to FIGS. 1 and 2, it is noted that the examples are illustrative and non-limiting. For example, although the patch panel 250 and the connectors 260, 270 are illustrated in FIG. 2, in other cases, the electrical system 188 includes one or more other components (alternatively or in addition to the patch panel 250 and the connectors 260, 270). As a particular example, a patch panel can include a daughter card (not shown in FIG. 2). Another example of a type of wiring connection is a fuse (e.g., a fuse having a particular current rating).

One or more aspects of FIG. 2 reduce complexity associated with wiring of the electrical system 188. For example, during design, a user can select the logical connection 116 without necessarily specifying physical connections (e.g., without specifying that a cable is to be routed through a patch panel). As a result, the user can avoid specifying physical properties of the connection, which can instead be determined by the processor 166 using wiring information 170. Further, in some implementations, the patch panel assembly design manufacturing report 152 specifies a characteristic of a physical connection (e.g., the type of wiring connection 148), reducing or avoiding instances of manually following a cable from an output, through a patch panel, and to a destination, etc.

To further illustrate certain aspects of the disclosure, a particular example of a process performed by the processor 166 includes receiving, from a user, input indicating modeling of wiring connectivity and interfaces (e.g., via the GUI 108 during execution of the design tool 168) between devices (e.g., any devices described with reference to the first component 112 and the second component 120, one or more other devices, or a combination thereof) and patch panel assemblies (e.g., the patch panel 250). The process further includes receiving, from the user, input selecting a subset of interfaces from the available set of modeled interfaces. The process further includes instantiating logical interfaces of the selected subset of interfaces and receiving user input defining logical connections (e.g., the logical connection 116) between instantiated logical interfaces. The process further includes translating user-defined logical connections to physical wire definitions and inserting the physical wire definitions into a patch panel assembly design manufacturing report (e.g., the patch panel assembly design manufacturing report 152). The process further includes exporting the patch panel assembly design manufacturing report, such as by storing the sending the patch panel assembly design manufacturing report 152 to a non-volatile memory or by sending the patch panel assembly design manufacturing report 152 to another device via a communication network (e.g., the Internet), as an illustrative example.

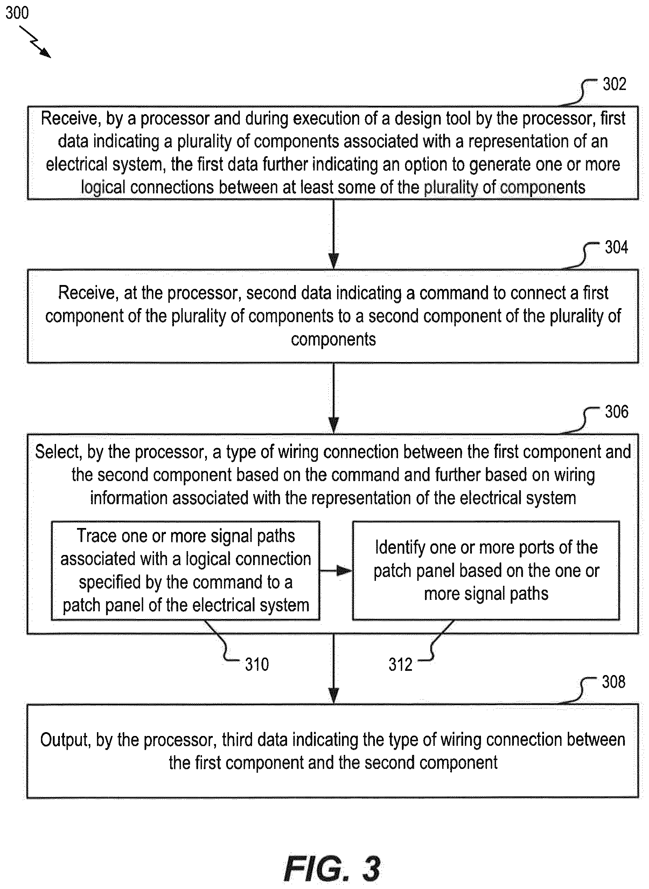

Referring to FIG. 3, a particular illustrative example of a method of processor-aided wiring of components of an electrical system is depicted and generally designated 300. In a particular example, operations of the method 300 are performed by the processor 166.

The method 300 includes receiving, by a processor (e.g., the processor 166) and during execution of a design tool by the processor (e.g., during execution of the design tool 168), first data (e.g., the first data 182) indicating a plurality of components (e.g., the plurality of components 184) associated with a representation of an electrical system (e.g., the representation 124 of the electrical system 188), at 302. The first data further indicates an option (e.g., the option 186) to generate one or more logical connections (e.g., the logical connection 116) between at least some of the plurality of components.

The method 300 further includes receiving, at the processor, second data (e.g., the second data 128), at 304. The second data indicates a command (e.g., the command 132) to connect a first component (e.g., the first component 112) of the plurality of components to a second component (e.g., the second component 120) of the plurality of components.

The method 300 further includes selecting, by the processor, a type of wiring connection (e.g., the type of wiring connection 148) between the first component and the second component based on the command and further based on wiring information (e.g., the wiring information 170) associated with the representation of the electrical system, at 306. The method 300 further includes outputting, by the processor, third data (e.g., the third data 140) indicating the type of wiring connection between the first component and the second component, at 308.

In some examples of the method 300, selecting the type of wiring connection includes tracing, at 310, one or more signal paths (e.g., the signal path 290) associated with a logical connection (e.g., the logical connection 116) specified by the command to a patch panel (e.g., the patch panel 250) of the electrical system and identifying, at 312, based at least in part on port availability of the patch panel, or more ports of the patch panel based on the one or more signal paths (e.g., by selecting one or more of the ports 252, 256). Tracing one or more signal paths by the processor and identifying ports of the patch panel simplifies component wiring, such as by reducing or avoiding instances of a user "manually" defining or locating wiring.

In some examples of the method 300, the type of wiring connection is selected based on one or more characteristics of the one or more signal paths. In some examples, selecting the type of wiring connection based on the one or more characteristics improves performance. For example, in some implementations, one or more of a gauge of wire or a type of fuse are selected based on a voltage or current of a signal, reducing or avoiding instances of a blown fuse, as an illustrative example.

In some examples of the method 300, the type of wiring connection corresponds to one or more of a particular port of a patch panel (e.g., the port 252 of the patch panel 250, the port 256 of the patch panel 250, or both) of the electrical system or a particular pin of a connector (e.g., the pin 264 of the connector 260, the pin 274 of the connector 270, or both) of the electrical system. In this case, performance is improved, such as by reducing or avoiding instances of a user manually defining or locating a port or a pin.

In some examples of the method 300, the wiring information specifies a physical layout (e.g., the physical layout 172) of the electrical system, port availability (e.g., the port availability 174) of one or more patch panels (e.g., the patch panel 250), connector availability (e.g., the connector availability 176 indicating availability of the connectors 260, 270) of the electrical system, one or more electrical components of the electrical system (e.g., a daughter card or a fuse), one or more wiring harnesses of the electrical system, or a combination thereof.

In some examples of the method 300, the third data indicates a modified representation (e.g., the modified representation 144) of the electrical system based on the type of wiring connection. In some implementations, the modified representation enables a user to verify the type of wiring connection 148, such as by presenting the modified representation via the GUI 108.

In some examples of the method 300, the third data indicates at least part of a patch panel assembly design manufacturing report (e.g., the patch panel assembly design manufacturing report 152). In some implementations, the patch panel assembly design manufacturing report enables wiring and verification of components of the electrical system.

In some examples of the method 300, the command is received based on user input via a GUI (e.g., based on the user input 136 via the GUI 108). Receiving the command via the GUI enables a user to efficiently specify a logical connection, such as the logical connection 116.

In some implementations, the method 300 further includes initiating display of the type of wiring connection via the GUI. Initiating display of the type of wiring connection via the GUI enables a user to verify the type of wiring connection.

In some examples of the method 300, the third data further includes test instructions to verify that a physical connection made based on the type of wiring connection matches criteria specified by the representation of the electrical system. The test instructions enable the physical connection to be verified (e.g., tested or debugged).

In some examples of the method 300, one or more of the first component or the second component include an LRU (e.g., the LRU 202) of the electrical system, a test system (e.g., the test system 204) of the electrical system, a user console (e.g., the user console 206) of the electrical system, simulation hardware (e.g., the simulation hardware 218) of the electrical system, or a control computer (e.g., the control computer 220) of the electrical system. As a result, one or more of the LRU, the test system, the user console, the simulation hardware, or the control computer can be coupled using processor-aided wiring.

In some examples of the method 300, the electrical system is included in a vehicle. As a result, processor-aided wiring to simplify wiring of the vehicle.

One or more aspects of the method 300 reduce complexity associated with wiring of an electrical system. For example, during design, a user can select a logical connection without necessarily specifying physical connections (e.g., without specifying that a cable is to be routed through a patch panel). As a result, the user can avoid specifying physical properties of the connection, which can instead be determined by a processor using wiring information. Further, in some implementations, a patch panel assembly design manufacturing report specifies a characteristic of a physical connection, reducing or avoiding instances of manually following a cable from an output, through a patch panel, and to a destination, etc. Alternatively or in addition, wiring connections can be selected that optimize certain parameters, such as vehicle weight, ease of assembly, performance, one or more other parameters, or a combination thereof.

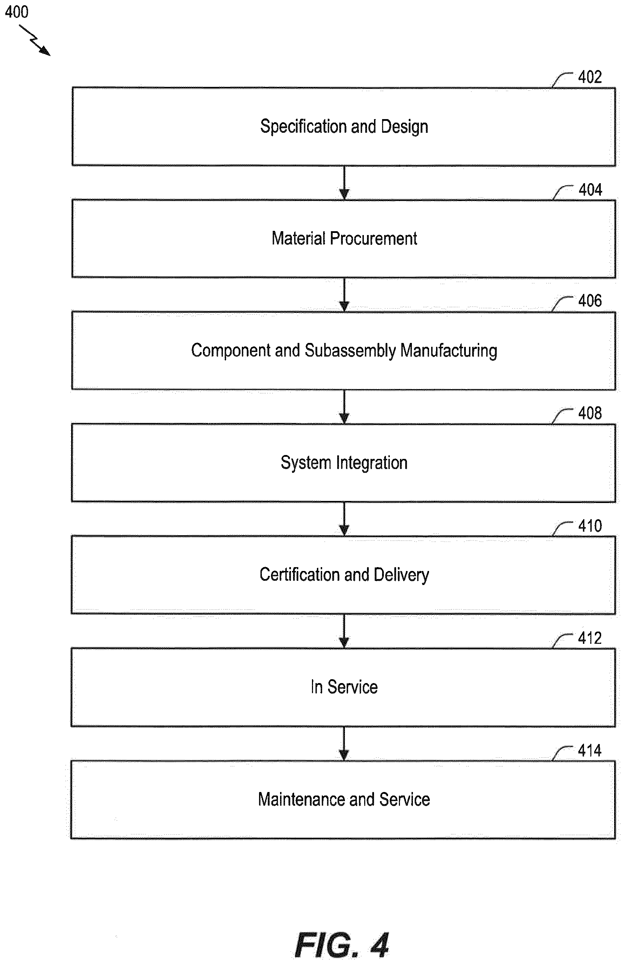

Referring to FIG. 4, a flowchart of an illustrative example of a life cycle of a vehicle (e.g., an aircraft) including the electrical system 188 is depicted and generally designated 400. During pre-production, the exemplary method 400 includes specification and design of the vehicle, at 402. For example, specification and design of the vehicle can include performing processor-aided wiring of components of an electrical system to determine a type of wiring connection associated with the components. In a particular example, specification and design of the vehicle includes performing one or more operations of the method 300 of FIG. 3 (e.g., to determine the type of wiring connection 148). During the specification and design of the vehicle, the method 400 includes specifying components, such as one or more of the first component 112, the second component 120, the patch panel 250, the connector 260, or the connector 270.

At 404, the method 400 includes material procurement. For example, the method 400 can include procuring materials for the vehicle (such as by procuring materials for one or more of the first component 112, the second component 120, the patch panel 250, the connector 260, or the connector 270).

During production, the method 400 includes, at 406, component and subassembly manufacturing and, at 408, system integration of the vehicle. In some implementations, system integration of the method 400 includes forming a physical connection of the electrical system 188 based on the type of wiring connection 148, such as based on the patch panel assembly design manufacturing report 152, as an illustrative example.

The method 400 includes certification and delivery of the vehicle, at 410, and placing the vehicle in service, at 412. In some implementations, certifying the vehicle includes performing a test process of the physical connection to verify the physical connection. In some examples, the test process is performed based on the test instructions 156 of FIG. 1. In some implementations, service of the vehicle includes operating the vehicle using the electrical system 188.

While in service, the vehicle may be scheduled for routine maintenance and service (which may also include modification, reconfiguration, refurbishment, and so on). At 414, the method 400 includes performing maintenance and service on the vehicle. To illustrate, in some examples, performing maintenance and service may include inspecting and servicing the physical connection of the electrical system 188. In some examples, a test process in accordance with the test instructions 156 is added to a troubleshooting manual associated with the vehicle, and maintenance and service is performed using the test process indicated by the troubleshooting manual.

In a particular example, maintenance and service is performed using the patch panel assembly design manufacturing report 152 of FIG. 1. For example, a particular cable may be identified using information identified by the patch panel assembly design manufacturing report 152 of FIG. 1 (e.g., instead of following an output of one component through a patch panel to an input of another component to identify the cable).

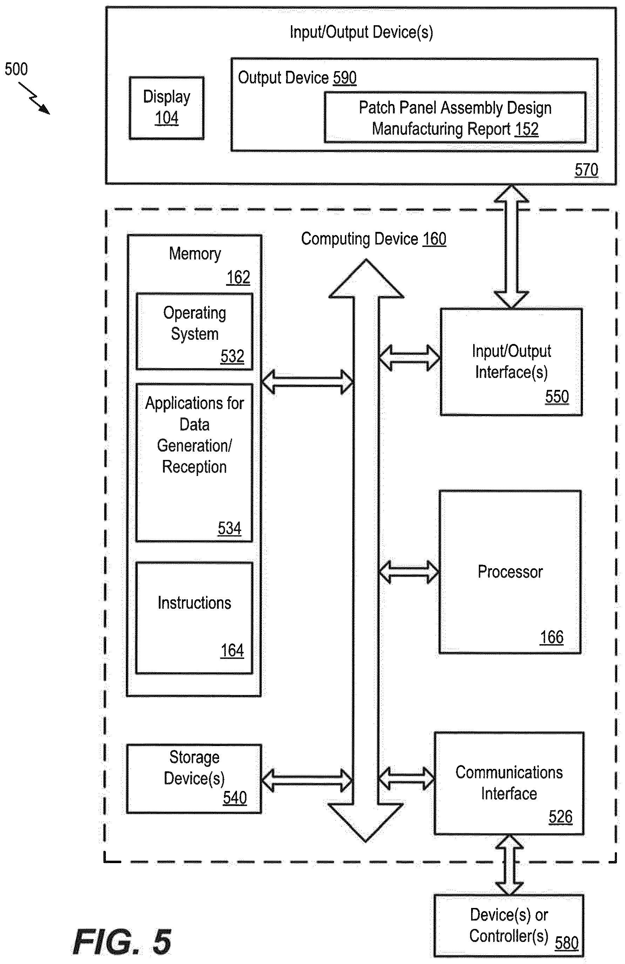

FIG. 5 is an illustration of a block diagram of a computing environment 500 including the computing device 160. The computing device 160 is configured to support embodiments of computer-implemented methods and computer-executable program instructions (or code) according to the present disclosure. In some examples, the computing device 160, or portions thereof, executes instructions to initiate, perform, or control operations described herein.

The computing device 160 includes the processor 166. The processor 166 is configured to communicate with the memory 162 (e.g., a system memory or another memory), one or more storage devices 540, one or more input/output interfaces 550, a communications interface 526, or a combination thereof.

Depending on the particular implementation, the memory 162 includes volatile memory devices (e.g., random access memory (RAM) devices), nonvolatile memory devices (e.g., read-only memory (ROM) devices, programmable read-only memory, or flash memory), one or more other memory devices, or a combination thereof. In FIG. 5, the memory 162 stores an operating system 532, which can include a basic input/output system for booting the computing device 160 as well as a full operating system to enable the computing device 160 to interact with users, other programs, and other devices. The particular example of FIG. 5 also depicts that the memory 162 stores one or more applications 534 executable by the processor 166. In some examples, the one or more applications 534 include instructions executable by the processor 166 to transmit signals between components of the computing device 160, such as the memory 162, the one or more storage devices 540, the one or more input/output interfaces 550, the communications interface 526, or a combination thereof.

In some implementations, one or more storage devices 540 include nonvolatile storage devices, such as magnetic disks, optical disks, or flash memory devices. In some examples, the one or more storage devices 540 include removable memory devices, non-removable memory devices or both. In some cases, the one or more storage devices 540 are configured to store an operating system, images of operating systems, applications, and program data. In a particular example, the memory 162, the one or more storage devices 540, or both, include tangible computer-readable media.

In the example of FIG. 5, the processor 166 is configured to communicate with the one or more input/output interfaces 550 to enable the computing device 160 to communicate with one or more input/output devices 570 to facilitate user interaction. In some implementations, the one or more input/output interfaces 550 include serial interfaces (e.g., universal serial bus (USB) interfaces or Institute of Electrical and Electronics Engineers (IEEE) 1394 interfaces), parallel interfaces, display adapters, audio adapters, one or more other interfaces, or a combination thereof. In some examples, the one or more input/output devices 570 include keyboards, pointing devices, displays, speakers, microphones, touch screens, one or more other devices, or a combination thereof. In some examples, the processor 166 is configured to detect interaction events based on user input received via the one or more input/output interfaces 550. Additionally, in some implementations, the processor 166 is configured to send information to the display 104 via the one or more input/output interfaces 550.

In some implementations, the one or more input/output devices 570 include an output device 590. In some implementations, the output device 590 is configured to generate the patch panel assembly design manufacturing report 152. As an example, in some implementations, the output device 590 includes a printer configured to print the patch panel assembly design manufacturing report 152 in response to a command from the processor 166.

In a particular example, the processor 166 is configured to communicate with (or send signals to) one or more devices 580 using the communications interface 526. In some implementations, the communications interface 526 includes one or more wired interfaces (e.g., Ethernet interfaces), one or more wireless interfaces that comply with an IEEE 802.11 communication protocol, one or more other wireless interfaces, one or more optical interfaces, or one or more other network interfaces, or a combination thereof. In some examples, the one or more devices 580 include host computers, servers, workstations, one or more other computing devices, or a combination thereof. In some examples, the processor 166 is configured to send the patch panel assembly design manufacturing report 152 to the one or more devices 580 using the communications interface 526.

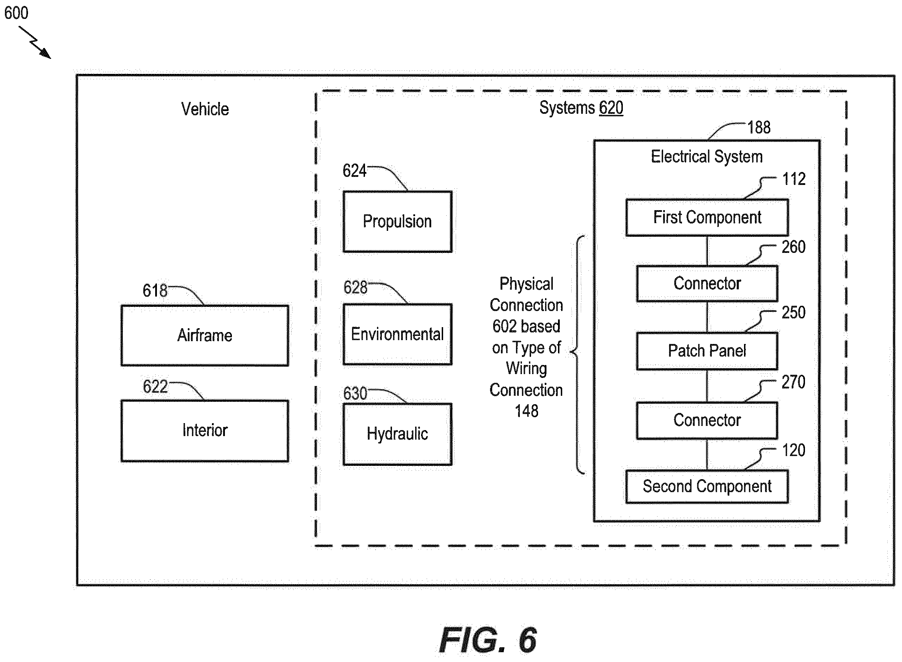

Aspects of the disclosure may be described in the context of an example of a vehicle 600 as shown in FIG. 6. In some examples, the vehicle 600 includes or corresponds to an aircraft.

The vehicle 600 includes the electrical system 188. In the example of FIG. 6, the electrical system 188 includes the first component 112, the second component 120, the patch panel 250, the connector 260, and the connector 270. The first component 112 is coupled to the second component 120 via a physical connection 602 (e.g., through the patch panel 250, the connector 260, and the connector 270) that is based on the type of wiring connection 148 determined by the processor 166.

As shown in FIG. 6, the vehicle 600 includes an airframe 618 with a plurality of systems 620 and an interior 622. Examples of the plurality of systems 620 include one or more of a propulsion system 624, the electrical system 188, an environmental system 628, and a hydraulic system 630. Any number of other systems may be included.

Further, the disclosure comprises examples according to the following clauses:
Clause 1. A method of processor-aided wiring of components of an electrical system, the method comprising: receiving, by a processor and during execution of a design tool by the processor, first data indicating a plurality of components associated with a representation of an electrical system, the first data further indicating an option to generate one or more logical connections between at least some of the plurality of components; receiving, at the processor, second data indicating a command to connect a first component of the plurality of components to a second component of the plurality of components; selecting, by the processor, a type of wiring connection between the first component and the second component based on the command and further based on wiring information associated with the representation of the electrical system; and outputting, by the processor, third data indicating the type of wiring connection between the first component and the second component.
Clause 2. The method of clause 1, wherein selecting the type of wiring connection includes: tracing one or more signal paths associated with a logical connection specified by the command to a patch panel of the electrical system; and based at least in part on port availability of the patch panel, identifying one or more ports of the patch panel based on the one or more signal paths.
Clause 3. The method of clause 2, wherein the type of wiring connection is selected based on one or more characteristics of the one or more signal paths.
Clause 4. The method of any of clauses 1 - 3, wherein the type of wiring connection corresponds to one or more of a particular port of a patch panel of the electrical system or a particular pin of a connector of the electrical system.
Clause 5. The method of any of clauses 1 - 4, wherein the wiring information specifies a physical layout of the electrical system, port availability of one or more patch panels, connector availability of the electrical system, one or more electrical components of the electrical system, one or more wiring harnesses of the electrical system, or a combination thereof.
Clause 6. The method of any of clauses 1 - 5, wherein the third data indicates a modified representation of the electrical system based on the type of wiring connection.
Clause 7. The method of any of clauses 1 - 6, wherein the third data indicates at least part of a patch panel assembly design manufacturing report.
Clause 8. The method of any of clauses 1 - 7, wherein the command is received based on user input via a graphical user interface (GUI).
Clause 9. The method of clause 8, further comprising initiating display of the type of wiring connection via the GUI.
Clause 10. The method of any of clauses 1 - 9, wherein the third data further includes test instructions to verify that a physical connection made based on the type of wiring connection matches criteria specified by the representation of the electrical system.
Clause 11. The method of any of clauses 1 - 10, wherein one or more of the first component or the second component comprise a line-replaceable unit (LRU) of the electrical system, a test system of the electrical system, a user console of the electrical system, simulation hardware of the electrical system, or a control computer of the electrical system.
Clause 12. The method of any of clauses 1 - 11, wherein the electrical system is included in a vehicle.
Clause 13. An apparatus to aid in wiring of components of an electrical system, the apparatus comprising: a memory configured to store instructions of a design tool; and a processor coupled to the memory and configured to receive first data indicating a plurality of components associated with a representation of an electrical system, the first data further indicating an option to generate one or more logical connections between at least some of the plurality of components, the processor further configured to receive second data indicating a command to connect a first component of the plurality of components to a second component of the plurality of components, the processor further configured to execute the instructions to select a type of wiring connection between the first component and the second component based on the command and further based on wiring information associated with the representation of the electrical system, the processor further configured to execute the instructions to output third data indicating the type of wiring connection between the first component and the second component.
Clause 14. The apparatus of clause 13, further comprising a display configured to present a graphical user interface (GUI), wherein the command is received based on user input via the GUI.
Clause 15. The apparatus of clause 14, wherein the processor is further configured to initiate display of the type of wiring connection via the GUI.
Clause 16. The apparatus of any of clauses 13 - 15, further comprising an output device configured to output a patch panel assembly design manufacturing report based on the type of wiring connection.
Clause 17. A computer-readable medium storing instructions executable by a processor to initiate, perform, or control operations for processor-aided wiring of components of an electrical system, the operations comprising: receiving, by a processor and during execution of a design tool by the processor, first data indicating a plurality of components associated with a representation of an electrical system, the first data further indicating an option to generate one or more logical connections between at least some of the plurality of components; receiving, at the processor, second data indicating a command to connect a first component of the plurality of components to a second component of the plurality of components; selecting, by the processor, a type of wiring connection between the first component and the second component based on the command and further based on wiring information associated with the representation of the electrical system; and outputting, by the processor, third data indicating the type of wiring connection between the first component and the second component.
Clause 18. The computer-readable medium of clause 17, wherein selecting the type of wiring connection includes: tracing one or more signal paths associated with a logical connection specified by the command to a patch panel of the electrical system; and identifying one or more ports of the patch panel based on the one or more signal paths.
Clause 19. The computer-readable medium of clause 18, wherein the type of wiring connection is selected based on one or more characteristics of the one or more signal paths.
Clause 20. The computer-readable medium of any of clauses 17 - 19, wherein the electrical system is included in a vehicle.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

In addition, in the foregoing Detailed Description, various features may be grouped together or described in a single implementation for the purpose of streamlining the disclosure. Examples described above illustrate, but do not limit, the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A method (300) of processor-aided wiring of components of an electrical system, the method comprising:
receiving (302), by a processor (166) and during execution of a design tool (168) by the processor, first data (182) indicating a plurality of components (184) associated with a representation (124) of an electrical system (188), the first data further indicating an option (186) to generate one or more logical connections (116) between at least some of the plurality of components;
receiving (304), at the processor, second data (128) indicating a command (132) to connect a first component (112) of the plurality of components to a second component (120) of the plurality of components;
selecting (306), by the processor, a type of wiring connection (148) between the first component and the second component based on the command and further based on wiring information (170) associated with the representation of the electrical system; and
outputting (308), by the processor, third data (140) indicating the type of wiring connection between the first component and the second component.

2. The method of claim 1, wherein selecting the type of wiring connection includes:
tracing (310) one or more signal paths (290) associated with a logical connection (116) specified by the command to a patch panel (250) of the electrical system; and
based at least in part on port availability of the patch panel, identifying (312) one or more ports (252, 256) of the patch panel based on the one or more signal paths.

3. The method of claim 2, wherein the type of wiring connection is selected based on one or more characteristics of the one or more signal paths.

4. The method of any of claims 1 - 3, wherein at least one of:
the type of wiring connection corresponds to one or more of a particular port (252, 256) of a patch panel of the electrical system or a particular pin (262, 264, 272, 274) of a connector (260, 270) of the electrical system;
the wiring information specifies a physical layout (172) of the electrical system, port availability (174) of one or more patch panels, connector availability (176) of the electrical system, one or more electrical components (178) of the electrical system, one or more wiring harnesses (180) of the electrical system, or a combination thereof;
the third data indicates a modified representation (144) of the electrical system based on the type of wiring connection; and
the third data indicates at least part of a patch panel assembly design manufacturing report (152).

5. The method of any of claims 1 - 4, wherein the command is received based on user input (136) via a graphical user interface (GUI) (108).

6. The method of claim 5, further comprising initiating display of the type of wiring connection via the GUI.

7. The method of any of claims 1 - 6, wherein at least one of:
the third data further includes test instructions (156) to verify that a physical connection (602) made based on the type of wiring connection matches criteria specified by the representation of the electrical system;
one or more of the first component or the second component comprise a line-replaceable unit (LRU) (202) of the electrical system, a test system (204) of the electrical system, a user console (206) of the electrical system, simulation hardware (218) of the electrical system, or a control computer (220) of the electrical system; and
the electrical system is included in a vehicle (600).

8. An apparatus to aid in wiring of components of an electrical system, the apparatus comprising:
a memory (162) configured to store instructions (164) of a design tool (168); and
a processor (166) coupled to the memory and configured to receive first data (182) indicating a plurality of components (184) associated with a representation (124) of an electrical system (188), the first data further indicating an option (186) to generate one or more logical connections (116) between at least some of the plurality of components, the processor further configured to receive second data (128) indicating a command (132) to connect a first component (112) of the plurality of components to a second component (120) of the plurality of components, the processor further configured to execute the instructions to select a type of wiring connection (148) between the first component and the second component based on the command and further based on wiring information (170) associated with the representation of the electrical system, the processor further configured to execute the instructions to output third data (140) indicating the type of wiring connection between the first component and the second component.

9. The apparatus of claim 8, further comprising a display (104) configured to present a graphical user interface (GUI) (108), wherein the command is received based on user input (136) via the GUI.

10. The apparatus of claim 9, wherein the processor is further configured to initiate display of the type of wiring connection via the GUI.

11. The apparatus of any of claims 8 - 10, further comprising an output device (590) configured to output a patch panel assembly design manufacturing report (152) based on the type of wiring connection.
